# EUROPÄISCHE PATENTANMELDUNG

(11) **EP 4 461 587 A1**
(43) Veröffentlichungstag der Anmeldung: **13.11.2024**
(21) Anmeldenummer: 23173218.1
(22) Anmeldetag: 12.05.2023
(51) Int. Cl.: B60L 53/12, B60L 53/124

(54) **FLURFÖRDERZEUG MIT EINER FAHRERSTANDPLATTFORM**

(71) Anmelder: Jungheinrich Aktiengesellschaft, 22047 Hamburg (DE)
(72) Erfinder: Petersen, Marinus, 24536 Neumünster (DE)
(74) Vertreter: Hauck Patentanwaltspartnerschaft mbB

(57) **Zusammenfassung**

Flurförderzeug mit einem Lastteil und einem Antriebsteil, das eine Fahrerstandplattform und einen elektrischen Antrieb, einen Energiespeicher, ein Ladegerät und eine Ladesteuerung aufweist, wobei das Ladegerät eine induktive Ladeeinheit aufweist, wobei die induktive Ladeeinheit unterhalb der Fahrerstandplattform angeordnet ist.

## Beschreibung

Die vorliegende Erfindung betrifft ein Flurförderzeug mit einem Lastteil und einem Antriebsteil, das eine Fahrerstandplattform besitzt. Das Flurförderzeug ist mit einem elektrischen Antrieb, einem Energiespeicher und einem Ladegerät sowie einer Ladesteuerung ausgestattet.

Deichselgeführte und -gelenkte Flurförderzeuge, wie beispielsweise Deichselhubwagen, werden oft in großen Flotten für vielfältige Aufgaben eingesetzt, beispielsweise für das Be- und Entladen von LKWs, Kommissioniervorgänge sowie das Ein- und Auslagern von Waren in geringer und mittlerer Höhe, beispielsweise bis zu einer Höhe von 6m. Ferner werden diese Flurförderzeuge auch zum Transport von Waren über längere Strecken eingesetzt. Diese Flotten werden häufig in einem Mehrschichtbetrieb eingesetzt, um die erforderlichen Kapazitäten bereitzustellen.

Für den Betrieb ist ein regelmäßiges Laden der Batterien an dem Fahrzeug erforderlich, wobei bei einem kabelgebundenen Ladevorrang das einzelne Flurförderzeug nicht eingesetzt werden kann. Zudem fällt bei einer Flotte von Flurförderzeugen auch ins Gewicht, dass die Fahrzeuge in eine Ladeposition gefahren, angesteckt und nach erfolgtem Ladevorgang wieder abgesteckt und für einen nachfolgenden Einsatz bereitgestellt werden müssen. Dies verbraucht nicht unerhebliche Kapazitäten und Personaleinsatz.

Neben dem leitungsgebundenen Ladevorgang ist auch ein induktiver Ladevorgang bekannt. Bei einem induktiven Ladevorgang muss eine Ladespule an dem zu ladenden Flurförderzeug angebracht werden. Bei kompaktbauenden Flurförderzeugen wie beispielsweise Schnellläufern ist nur wenig Bauraum für eine Ladespule vorhanden. Als Schnellläufer werden Flurförderzeuge mit einem gelenkten und angetriebenen Rad bezeichnet. Schnellläufer-Fahrzeuge besitzen in der Regel ein 3- oder 5-rädriges Fahrwerk, das fahrzeugseitig genau ein angetriebenes und gelenktes Rad besitzt. Bei dem 5-rädrigen Fahrwerk sind zwei seitlich zu dem angetriebenen und gelenkten Rad angeordnete Stützräder oder Stützrollen vorgesehen. Theoretisch ist ein Schnellläufer mit vier Rädern möglich, wenn das gelenkte und angetriebene Rad außermittig angeordnet ist und nur ein seitlich dazu angeordnetes Stützrad oder -rolle vorgesehen ist.

Der Erfindung liegt die Aufgabe zugrunde, einen Schnellläufer mit Fahrerstandplattform zur Verfügung zu stellen, der mit einem induktiven Ladesystem zusammenwirken kann.

Erfindungsgemäß wird die Aufgabe durch ein Flurförderzeug mit den Merkmalen aus Anspruch 1 gelöst. Vorteilhafte Ausgestaltungen bilden die Fahrzeuge nach den Unteransprüchen.

Das erfindungsgemäße Flurförderzeug besitzt ein Lastteil und ein Antriebsteil, das eine Fahrerstandplattform und einen elektrischen Antrieb aufweist. Ferner sind an dem Flurförderzeug ein Energiespeicher, ein Ladegerät und eine Ladesteuerung vorgesehen. Das Ladegerät insgesamt weist eine induktive Ladeeinheit auf, die es erlaubt, das Flurförderzeug induktiv zu laden, bevorzugt auch, das Fahrzeug dynamisch induktiv zu laden, d. h. während der Fahrt einen induktiven Ladevorgang durchzuführen. Erfindungsgemäß ist vorgesehen, dass die induktive Ladeeinheit unterhalb der Fahrerstandplattform angeordnet ist. Die Positionierung der induktiven Ladeeinheit unterhalb der Fahrerstandplattform besitzt eine Reihe von Vorteilen. So ist die induktive Ladeeinheit wirksam gegen Beschädigungen geschützt, ohne dass die äußeren Abmessungen des Fahrzeugs vergrößert werden. Die Spule ist zudem platzsparend und in Bodennähe angeordnet, zudem kann ein Benutzer das Flurförderzeug mit der induktiven Ladeeinheit relativ genau positionieren, da diese sich unter seinen Füßen befindet und er sich so gut orientieren kann. Ein weiterer Vorteil ist, dass die Fahrerstandplattform mit vergleichsweise wenig Metall ausgebildet werden kann, sodass die induktive Energieübertragung unwesentlich beeinträchtigt ist.

In einer bevorzugten Weiterbildung handelt sich bei dem Flurförderzeug mit einer Fahrerstandplattform um einen Deichselstapler oder um einen Deichselhubwagen.

Besonders bevorzugt handelt es sich bei dem Flurförderzeug um einen Schnellläufer mit einem gelenkten und angetriebenen Rad. Der Schnellläufer ist weiter bevorzugt mit einem 3-rädrigen oder mit einem 5-rädigen Fahrwerk ausgebildet und weiter vorzugsweise mit einem in Breitenrichtung des Fahrzeugs mittig angeordneten Antriebsrad. Bei dieser Art von Fahrzeugen ist die Erfindung insofern besonders vorteilhaft anwendbar, da die Anbringung einer Ladespule bei mittig angeordnetem Antriebsrad im Zentralbereich des Antriebsteils des Fahrzeugs wegen des dort sich befindlichen Antriebsrades aus Platzgründen nur schwer möglich ist. Da Radstand und äußere Abmessungen dieser Fahrzeuge für die Handhabbarkeit und die Fahreigenschaften entscheidende Eigenschaften in engen Lagerumgebungen darstellen, ist eine Vergrößerung dieser Parameter nur unter Inkaufnahme von entsprechenden Nachteilen möglich. Dementsprechend führt die erfindungsgemäße Anbringung der Ladespule unterhalb der Fahrerstandplattform und damit ohne Vergrößerung der äußeren Abmessungen des Fahrzeugs bzw. ohne Anpassung des Radstandes zu besonderen Vorteilen.

Bevorzugt weist die induktive Ladeeinheit eine Ladespule auf, die horizontal oder in einem geneigten Winkel unter der Fahrerstandplattform angeordnet ist.

Bevorzugt ist die induktive Ladeeinheit seitlich von der Fahrzeugkontur des Antriebsanteils umgeben. Hierbei ist bevorzugt die induktive Ladeeinheit seitlich von der Fahrzeugkontur des Antriebsanteils vor Stößen und anderer Fremdeinwirkung geschützt. Dadurch ist es nicht erforderlich, dass die Außenabmessung des Flurförderzeugs für die Aufnahme der induktiven Ladeeinheit vergrößert werden.

In einer bevorzugten Ausgestaltung weist die induktive Ladeeinheit eine Spule und eine Abschirmplatte auf, wobei die Abschirmplatte zwischen Spule und Fahrerstandplattform angeordnet ist. Durch die Abschirmplatte wird elektromagnetische Strahlung von dem Fahrer ferngehalten und der Wirkungsgrad der Energieübertragung wird deutlich erhöht.

In einer weiteren bevorzugten Ausgestaltung ist die induktive Ladeeinheit mit einer Spule ausgestattet, deren Leiter als Hohlleiter oder als galvanisch voneinander getrennte Einzellitzen ausgebildet sind. Weiter bevorzugt besitzt die Ladespule eine Grundplatte aus einem ferromagnetischen Material. Die Ausgestaltung der Ladespule gestattet ein effektives induktives Laden, sei es stationär oder dynamisch bei der Fahrt. Auch erlaubt die Ausgestaltung der Ladespule, diese als ein schnellladefähiges System mit Ladeleistung im Bereich von 4 kW bis 12 kW einzusetzen.

In einer weiteren bevorzugten Ausgestaltung ist für die induktive Ladeeinheit ein Sensor vorgesehen, der auf diese ausgerichtet ist und der Fremdkörper unterhalb der Ladespule erkennt. In einer weiter bevorzugten Ausgestaltung ist vorgesehen, dass das Ladegerät eine Leistungselektronik aufweist, die ebenfalls unterhalb der Fahrerstandplattform angeordnet ist.

Eine bevorzugte Ausgestaltung der Erfindung wird nachfolgend an einem Ausführungsbeispiel erläutert:
- Figur 1: zeigt einen Hubwagen mit einer Standplattform in einer perspektivischen Ansicht von unten.
- Figur 2: zeigt eine schematische Ansicht zur Anordnung der induktiven Ladeeinheit.

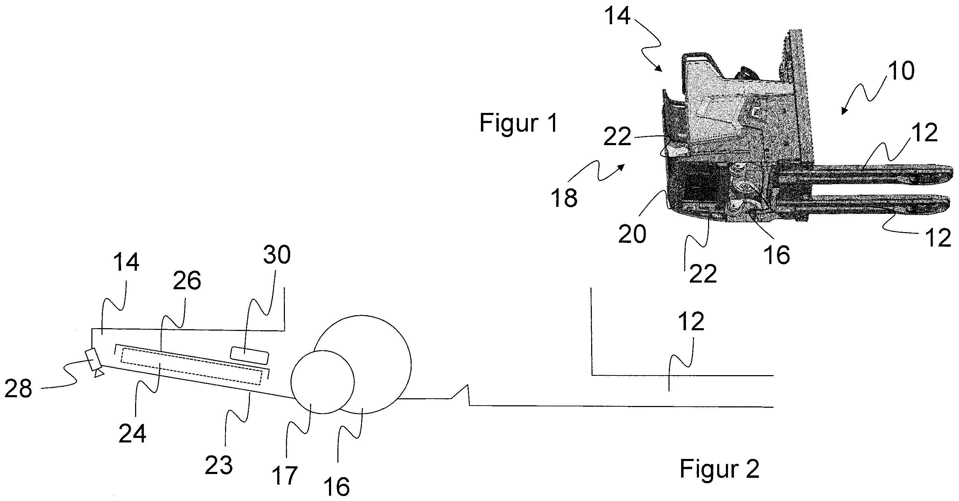

Figur 1 zeigt einen Niederhubwagen 10 mit zwei Lastarmen 12, einer Fahrerstandplattform 14 und einem Antriebsrad 16. Auf der von dem freien Ende fortweisenden Seite der Lastarme 12 sitzt das Antriebsteil 18 und eine induktive Ladeeinheit 20. Die induktive Ladeeinheit 20 ist seitlich von den Seitenwänden des Antriebsteils 18 begrenzt.

Figur 2 zeigt in einer schematischen Ansicht die räumliche Anordnung der induktiven Ladeeinheit. Zu erkennen ist einer der Lastarme 12 von der Seite sowie das angetriebene Rad 16. Ein im Umfang etwas kleineres Stützrad 17 ist seitlich neben dem gelenkten und angetriebenen Rad 16 vorgesehen. Zu erkennen ist die untere Kante 23 der Seitenwand 22 des Antriebsanteils 18. Verdeckt durch die Seitenwand 22 ist eine induktive Fahrzeugspule 24 vorgesehen, die zur Fahrerstandplattform 14 hin von einer Abschirmplatte 26 abgeschirmt ist. Schematisch dargestellt ist ein Sensor 28, der auf die induktive Ladespule und den darunterliegenden Bereich gerichtet ist. Der Sensor 28 erkennt beispielsweise Gegenstände und Hindernisse, die unterhalb der Fahrzeugspule sich befinden und den Ladevorgang behindern oder die Spule 24 beschädigen können. Schematisch dargestellt sind zudem noch Kompensationskapazitäten 30, die so ausgelegt sind, dass sie gemeinsam mit der Induktivität der Ladespule einen Schwingkreis ausbilden, der die Übertragung von hohen Leistungen mit hoher Energieeffizienz ermöglicht.
- 10: Niederhubwagen
- 12: Lastarm
- 14: Fahrerstandplattform
- 16: Antriebsrad
- 17: Stützrad
- 18: Antriebsteil
- 20: induktive Ladeeinheit
- 22: Seitenwand
- 23: Kante der Seitenwand
- 24: induktive Fahrzeugspule
- 26: Abschirmplatte
- 28: Sensor
- 30: Kompensationskapazitäten

## Patentansprüche

1. Flurförderzeug mit einem Lastteil und einem Antriebsteil (18), das eine Fahrerstandplattform (14) und einen elektrischen Antrieb, einen Energiespeicher, ein Ladegerät und eine Ladesteuerung aufweist, wobei das Ladegerät eine induktive Ladeeinheit (20) aufweist, **dadurch gekennzeichnet, dass** die induktive Ladeeinheit (20) unterhalb der Fahrerstandplattform (14) angeordnet ist.

2. Flurförderzeug nach Anspruch 1, **dadurch gekennzeichnet, dass** es sich um einen Deichselstapler oder einen Deichselhubwagen mit fester Fahrerstandplattform (14) handelt.

3. Flurförderzeug nach Anspruch 1 oder 2, **dadurch gekennzeichnet, dass** es sich um einen Schnellläufer mit einem gelenkten und angetriebenen Rad handelt.

4. Flurförderzeug nach einem der Ansprüche 1 bis 3, **dadurch gekennzeichnet, dass** die induktive Ladeeinheit (20) eine planare Spule aufweist.

5. Flurförderzeug nach einem der Ansprüche 1 bis 4, **dadurch gekennzeichnet, dass** die induktive Ladeeinheit (20) seitlich von der Fahrzeugkontur des Antriebsteils (18) umgeben ist.

6. Flurförderzeug nach einem der Ansprüche 1 bis 5, **dadurch gekennzeichnet, dass** die induktive Ladeeinheit (20) in einem geneigten Winkel angeordnet ist, wobei das vom Lastteil fortweisende Ende einen größeren Abstand vom Untergrund besitzt als das zum Lastteil weisende Ende.

7. Flurförderzeug nach einem der Ansprüche 1 bis 6, **dadurch gekennzeichnet, dass** die induktive Ladeeinheit (20) eine Spule und eine Abschirmplatte (26) aufweist, wobei die Abschirmplatte (26) zwischen Spule und Fahrerstandplattform (14) angeordnet ist.

8. Flurförderzeug nach einem der Ansprüche 1 bis 7, **dadurch gekennzeichnet, dass** die induktive Ladeeinheit (20) eine Spule aufweist, deren Leiter als Hohlleiter oder als galvanisch voneinander getrennte Einzellitzen ausgebildet sind.

9. Flurförderzeug nach einem der Ansprüche 1 bis 8, **dadurch gekennzeichnet, dass** die Ladespule ferner eine Grundplatte aus einem ferromagnetischen Material aufweist.

10. Flurförderzeug nach einem der Ansprüche 1 bis 9, **dadurch gekennzeichnet, dass** ein auf die induktive Ladeeinheit (20) und/oder den Untergrund im Bereich der induktiven Ladeeinheit gerichteter Sensor (28) vorgesehen ist, der Fremdkörper erkennt.

11. Flurförderzeug nach einem der Ansprüche 1 bis 9, **dadurch gekennzeichnet, dass** das Lagegerät eine Leistungselektronik aufweist, die unterhalb der Fahrerstandplattform (14) angeordnet ist.

12. Flurförderzeug nach einem der Ansprüche 1 bis 11, **dadurch gekennzeichnet, dass** die Leistungselektronik des Ladegeräts in einem Gehäuse der Ladespule angeordnet ist.
